(19) 

Europäisches
Patentamt
European
Patent Office
Office européen
des brevets

(11) **EP 4 462 167 A1**

(12) **EUROPEAN PATENT APPLICATION**
published in accordance with Art. 153(4) EPC

(43) Date of publication:
**13.11.2024 Bulletin 2024/46**

(21) Application number: 22936307.2

(22) Date of filing: **03.08.2022**

(51) International Patent Classification (IPC):
*G02B 15/00* (2006.01)   *G02B 23/24* (2006.01)

(86) International application number:
**PCT/CN2022/109883**

(87) International publication number:
**WO 2023/193377 (12.10.2023 Gazette 2023/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.04.2022   CN 202210361101**

(71) Applicant: **ZHEJIANG HEALNOC TECHNOLOGY CO., LTD.**
**Hangzhou Zhejiang 310056 (CN)**

(72) Inventors:
• **WU, Pei**
 **Hangzhou, Zhejiang 310056 (CN)**
• **YAO, Weizhong**
 **Hangzhou, Zhejiang 310056 (CN)**

(74) Representative: **Murgitroyd & Company**
 **165-169 Scotland Street**
 **Glasgow G5 8PL (GB)**

(54) **OPTICAL ZOOM LENS, IMAGING DEVICE, AND ENDOSCOPE**

(57)     An optical zoom lens (100), an imaging device (200), and an endoscope (400) are provided. The optical zoom lens (100) includes: a lens group (40) and an aperture diaphragm (50). The lens group (40) includes: a first meniscus lens (L11), a first biconvex lens (L12), a second meniscus lens (L13), a first biconcave lens (L21), a second biconcave lens (L22), a second biconvex lens (L23), a third biconvex lens (L31), a third meniscus lens (L32), a fourth meniscus lens (L41), and a fourth biconvex lens (L42), wherein the aperture diaphragm (50) is arranged between the second meniscus lens (L13) and the first biconcave lens (L21), or is arranged on the first biconcave lens (L21).

FIG. 1

EP 4 462 167 A1

**Description**

**CROSS-REFERENCE TO RELATED APPLICATION**

The present application claims priority to Chinese patent application No. 202210361101.6, filed on April 7, 2022, and titled "OPTICAL ZOOM LENS AND IMAGING DEVICE", the content of which is hereby incorporated by reference in its entirety.

**TECHNICAL FIELD**

The present application relates to the field of optical imaging technology, in particular, to an optical zoom lens, an imaging device, and an endoscope.

**BACKGROUND**

With rapid development of intelligent medical treatment, optical lenses have been more and more applied in the field of medical treatment, especially in the field of medical endoscopes, requirements of people for the imaging pixels and sizes of the optical lenses are higher and higher. Therefore, more and more companies have begun to invest more research in endoscope lenses such as ultra-high-definition lenses, 4K resolution lenses, and the like, hoping to develop products with higher pixels and smaller sizes. At the same time, the introduction of optical zoom lenses has greatly improved the compatibility of endoscopic lenses in usage scenarios.

Currently, total track length of the optical zoom lenses in related art are long, and most optical zoom lenses have a total track length of more than 70mm. In order to improve the imaging quality of the optical zoom lenses, the number of lenses in the optical zoom lenses is generally 13, 14 or more. Although the imaging qualities of the optical zoom lenses are improved, the lens size of the optical zoom lenses are increased at the same time, which cannot meet miniaturization design requirements of optical zoom lenses.

**SUMMARY**

According to the embodiments of the present application, an optical zoom lens, an imaging device and an endoscope are provided.

In a first aspect, an optical zoom lens is provided in the present application, including: a lens group and an aperture diaphragm; wherein the lens group includes: a first meniscus lens, a first biconvex lens, a second meniscus lens, a first biconcave lens, a second biconcave lens, a second biconvex lens, a third biconvex lens, a third meniscus lens, a fourth meniscus lens and a fourth biconvex lens; and the aperture diaphragm is arranged between the second meniscus lens and the first biconcave lens, or is arranged on the first biconcave lens; wherein the first meniscus lens, the first biconvex lens, the second meniscus lens, the first biconcave lens, the second biconcave lens, the second biconvex lens, the third biconvex lens, the third meniscus lens, the fourth meniscus lens and the fourth biconvex lens are sequentially arranged from an object side of the optical zoom lens to an imaging side of the optical zoom lens.

In some embodiments, all of the first meniscus lens, the first biconcave lens, the second biconcave lens, the third meniscus lens and the fourth meniscus lens have a negative refractive power; and all of the first biconvex lens, the second meniscus lens, the second biconvex lens, the third biconvex lens and the fourth biconvex lens have a positive refractive power.

In some embodiments, a first lens group consisting of the first meniscus lens, the first biconvex lens and the second meniscus lens is formed, and a third lens group consisting of the third biconvex lens and the third meniscus lens group is formed; wherein a focal length of the first lens group and a focal length of the third lens group satisfy following formulas:

$$7.0 \leq f_1/f_w \times \tan(3\text{FOV}_W) \leq 9.5;$$

and

$$0.50 \leq f_3/f_T \times \tan(3\text{FOV}_T) \leq 0.60,$$

wherein the focal length of the first lens group is defined as $f_1$, a focal length of the optical zoom lens in a short-focal length state is defined as $f_w$, and a field of view of the optical zoom lens in a short-focal length state is defined as FOVw; and the focal length of the third lens group is defined as $f_3$, a focal length of the optical zoom lens in a long-focal length state is defined as $f_T$ and a field of view of the optical zoom lens in a long-focal length state is defined as $FOV_T$.

In some embodiments, the first meniscus lens is provided with a first object surface and a first imaging surface; the first biconvex lens is provided with a second object surface and a second imaging surface; the second meniscus lens is provided with a third object surface and a third imaging surface; the first biconcave lens is provided with a fourth object surface and a fourth imaging surface; the second biconcave lens is provided with a fifth object surface and a fifth imaging surface; the second biconvex lens is provided with a sixth object surface and a sixth imaging surface; the third biconvex lens is provided with a seventh object surface and a seventh imaging surface; the third meniscus lens is provided with an eighth object surface and an eighth imaging surface; the fourth meniscus lens is provided with a ninth object surface and a ninth imaging surface; and the fourth biconvex lens is provided with a tenth object surface and a tenth imaging surface. All of the first object surface, the second object surface, the second imaging surface, the third object surface, the sixth object surface, the sixth imaging surface, the seventh object surface, the seventh imaging surface, the eighth imaging surface, the ninth object surface, the tenth object surface and the tenth imaging surface are convex surfaces. All of the first imaging surface, the third imaging surface, the eighth object surface and the ninth imaging surface are concave surfaces. Both the fourth imaging surface and the fifth imaging surface are concave surfaces or planes.

In some embodiments, a radius of curvature of the second imaging surface and a radius of curvature of the third object surface satisfy with a following formula:

$$1.1 \leq |(R3-R4)/(R3+R4)| \leq 1.2;$$

wherein the radius of curvature of the second imaging surface is defined as R3 and the radius of curvature of the third object surface is defined as R4.

In some embodiments, a focal length of the first meniscus lens and a total track length of the optical zoom lens satisfy with a following formula:

$$|f_{11}/TTL| \leq 1.6;$$

wherein the focal length of the first meniscus lens is defined as $f_{11}$ and a total track length of the optical zoom lens is defined as TTL.

In some embodiments, a focal length of the first biconvex lens is less than or equal to 35, a focal length of the second biconvex lens is less than or equal to 20, and a focal length of the third biconvex lens is less than or equal to 17.

In some embodiments, an abbe number of the second meniscus lens is less than or equal to 71, an abbe number of the third biconvex lens is less than or equal to 70, and an abbe number of the fourth biconvex lens is less than or equal to 56.

In some embodiments, a refractive index of the second biconcave lens is less than or equal to 1.82, a refractive index of the third biconvex lens is less than or equal to 1.61, and a refractive index of the fourth biconvex lens is less than or equal to 1.7.

In some embodiments, the first meniscus lens is adhered to the first biconvex lens, the second biconcave lens is adhered to the second biconvex lens, and the fourth meniscus lens is adhered to the fourth biconvex lens.

In a second aspect, the present application provides an imaging device, which includes the optical zoom lens of the first aspect; an imaging element configured for transferring an optical imagery generated by the optical zoom lens into an electric signal; and a filter element, wherein the filter element is disposed between the fourth biconvex lens and the imaging side of the optical zoom lens.

In a third aspect, the present application provides an endoscope, which includes the optical zoom lens described in the first aspect above; and a connecting pipe, wherein the connecting pipe is connected to the optical zoom lens, and configured for transferring the optical imagery generated by the optical zoom lens.

Details of one or more embodiments of the present application are set forth in the accompanying drawings and description below. Other features, objects, and advantages of the present application will become apparent from the specification, the accompanying drawings, and the claims.

## BRIEF DESCRIPTION OF THE DRAWINGS

In order to better describe and illustrate the embodiments and/or examples of those applications disclosed herein, reference may be made to one or more of the accompanying drawings. The additional details or examples used to describe the accompanying drawings should not be considered a limitation on the scope of any of the disclosed applications, the embodiments and/or examples presently described, and the best mode of these applications as presently understood.

FIG. 1 is a structural schematic diagram of an optical zoom lens in some embodiments.

FIG. 2 is a structural schematic diagram of an imaging device in a short-focal length state in some embodiments.

FIG. 3 is a structural schematic diagram of an imaging device in a long-focal length state in some embodiments.

FIG. 4 is a modulation transfer function curve of an imaging device in visible spectrum at room temperature in a short-focal length state in some embodiments.

FIG. 5 shows field curvature and distortion of an imaging device in visible spectrum in a short-focal length state in some embodiments.

FIG. 6 is a first transverse ray fan of an imaging device in visible spectrum in a short-focal length state in some embodiments.

FIG. 7 is a second transverse ray fan of an imaging device in visible spectrum in a short-focal length state in some embodiments.

FIG. 8 is a third transverse ray fan of an imaging device in visible spectrum in a short-focal length state in some embodiments.

FIG. 9 is a fourth transverse ray fan of an imaging device in visible spectrum in a short-focal length state in some embodiments.

FIG. 10 is a fifth transverse ray fan of an imaging device in visible spectrum in a short-focal length state in some embodiments.

FIG. 11 is a first spot diagram of an imaging device in visible spectrum in a short-focal length state in some embodiments.

FIG. 12 is a second spot diagram of an imaging device in visible spectrum in a short-focal length state in some embodiments.

FIG. 13 is a third spot diagram of an imaging device in visible spectrum in a short-focal length state in some embodiments.

FIG. 14 is a fourth spot diagram of an imaging device in visible spectrum in a short-focal length state in some embodiments.

FIG. 15 is a fifth spot diagram of an imaging device in visible spectrum in a short-focal length state in some embodiments.

FIG. 16 is a modulation transfer function curve of an imaging device in visible spectrum at room temperature in a long-focal length state in some embodiments.

FIG. 17 shows field curvature and distortion of an imaging device in visible spectrum in a long-focal length state in some embodiments.

FIG. 18 is a first transverse ray fan of an imaging device in visible spectrum in a long-focal length state in some embodiments.

FIG. 19 is a second transverse ray fan of an imaging device in visible spectrum in a long-focal length state in some embodiments.

FIG. 20 is a third transverse ray fan of an imaging device in visible spectrum in a long-focal length state in some embodiments.

FIG. 21 is a fourth transverse ray fan of an imaging device in visible spectrum in a long-focal length state in some embodiments.

FIG. 22 is a fifth transverse ray fan of an imaging device in visible spectrum in a long-focal length state in some embodiments.

FIG. 23 is a first spot diagram of an imaging device in visible spectrum in a long-focal length state in some embodiments.

FIG. 24 is a second spot diagram of an imaging device in visible spectrum in a long-focal length state in some embodiments.

FIG. 25 is a third spot diagram of an imaging device in visible spectrum in a long-focal length state in some embodiments.

FIG. 26 is a fourth spot diagram of an imaging device in visible spectrum in a long-focal length state in some embodiments.

FIG. 27 is a fifth spot diagram of an imaging device in visible spectrum in a long-focal length state in some embodiments.

FIG. 28 is a structural schematic diagram of an endoscope in some embodiments.

## DETAILED DESCRIPTION

In order to make the purpose, technical solutions and advantages of the present application more clearly understood, the present application is described and illustrated below in conjunction with the accompanying drawings and embodiments. It should be understood that the specific embodiments described herein are only for explaining the present application and are not intended to limit the present application. Based on the embodiments provided in this application, all other embodiments obtained by a person of ordinary skill in the art without creative labour fall within the scope of protection of this application. In addition, it is also understood that although the efforts made in such a development process may be complex and lengthy, some changes in design, manufacture, or production based on the technical contents disclosed in the present application are just conventional technical means for a person of ordinary skill in the art related to the contents disclosed in this application, and should not be construed as the inadequacy of the contents disclosed in this application.

Reference to "embodiments" in the present application means that a particular feature, structure, or characteristic described in connection with an embodiment may be included in at least one embodiment of this application. The presence of the phrase at various points in the specification does not necessarily always refer to the same embodiment, nor is it a separate or alternative embodiment that is mutually exclusive of other embodiments. It is understood by one of ordinary skill in the art, both explicitly and implicitly, that the embodiments described in the present application may be combined with other embodiments without conflict.

Unless otherwise defined, technical or scientific terms covered by the present application shall have the ordinary meaning understood by a person of ordinary skill in the art to which the present application belongs. Words such as "one", "a", "a kind of", "the", and the like, as used in the present application, do not imply a limitation of quantity, but may denote the singular or the plural. The terms "include", "comprise", "have", and any variations thereof, as used in this application, are intended to cover non-exclusive inclusion. For example, a process, method, system, product or apparatus including a series of steps or modules (units) is not limited to the listed steps or units, but may also include steps or units that are not listed, or may also include other steps or units that are inherent to the process, method, product or apparatus. The terms "connected", "communicated", "coupled" and the like as used in the present application are not limited to physical or mechanical connections, but may include electrical connections, whether direct or indirect. The term "plurality" as used herein refers to more than or equal to two. The term "and/or" describes an association relationship of the associated objects and indicates that three types of relationships may exist, for example, "A and/or B" may indicate that A alone exists, both A and B exist, and B alone exists. The terms "first", "second", "third", etc., as used in the present application, are merely used to distinguish similar objects, and do not represent a specific ordering of the objects.

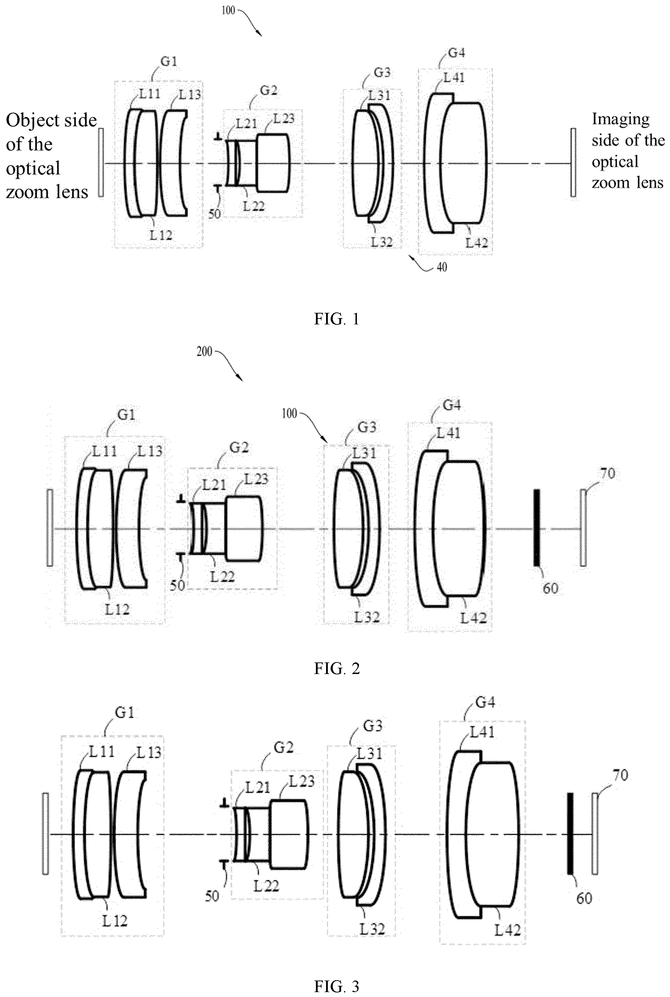

The present embodiment provides an optical zoom lens 100, FIG. 1 is a structural schematic diagram of an optical zoom lens in some embodiments. Referring to FIG. 1, the optical zoom lens 100 includes: a lens group 40 and an aperture diaphragm 50. The lens group 40 includes: a first meniscus lens L11, a first biconvex lens L12, a second meniscus lens L13, a first biconcave lens L21, a second biconcave lens L22, a second biconvex lens L23, a third biconvex lens L31, a third meniscus lens L32, a fourth meniscus lens L41 and a fourth biconvex lens L42. The aperture diaphragm 50 is disposed between the second meniscus lens L13 and the first biconcave lens L21, or disposed on the first biconcave lens L21. The first meniscus lens L11, the first biconvex lens L12, the second meniscus lens L13, the first biconcave lens L21, the second biconcave lens L22, the second biconvex lens L23, the third biconvex lens L31, the third meniscus lens L32, the fourth meniscus lens L41 and the fourth biconvex lens L42 are sequentially arranged from an object side of the optical zoom lens to an imaging side of the optical zoom lens.

In related art, total track lengths of the optical zoom lenses are relatively long, and most optical zoom lenses have a total track length of more than 70mm. In order to improve the imaging quality of the optical zoom lenses, the number of lenses in the optical zoom lenses is generally 13, 14 or more. Although the imaging qualities of the optical zoom lenses are improved, the lens size of the optical zoom lenses are increased at the same time, which cannot meet miniaturization design requirements of optical zoom lenses.

In order to solve the problem above, the optical zoom lens 100 provided in the present embodiment applies ten optical lenses having specific structures, and the ten optical lenses are sequentially arranged from the object side of the optical zoom lens to the imaging side of the optical zoom lens. In addition, the structures of the ten optical lenses having specific structures are easily processed. The optical zoom lens 100 in the present embodiment does not require at least thirteen or over thirteen optical lenses as the optical zoom lens in the related art requires, so that the cost of the imaging system can be controlled. At the same time, by distribution and combination of refractive power of each of the optical lenses, imaging system of the optical zoom lens 100 can realize better distortion control and have excellent imaging characteristics, so that the imaging quality of the optical zoom lens 100 is improved while considering miniaturization size of the lens of the optical zoom lens 100, which facilitates obtaining an imaging system having a low cost, short TTL (total track length), small size and high imaging quality.

For example, all of the first meniscus lens L11, the first biconcave lens L21, second biconcave lens L22, the third meniscus lens L32 and the fourth meniscus lens L41 have a negative refractive power; at the same time, all of the first biconvex lens L12, the second meniscus lens L13, the second biconvex lens L23, the third biconvex lens L31 and the fourth biconvex lens L42 have a positive refractive power.

In this way, by distribution and combination of refractive power of each of the optical lenses, imaging system of the optical zoom lens 100 can realize better distortion control and have excellent imaging characteristics.

In some embodiments, the first meniscus lens L11 is provided with a first object surface and a first imaging surface; the first biconvex lens L12 is provided with a second object surface and a second imaging surface; the second meniscus lens L13 is provided with a third object surface and a third imaging surface; the first biconcave lens L21 is provided with a fourth object surface and a fourth imaging surface; the second biconcave lens L22 is provided with a fifth object surface and a fifth imaging surface; the second biconvex lens L23 is provided with a sixth object surface and a sixth imaging surface; the third biconvex lens L31 is provided with a seventh object surface and a seventh imaging surface; the third meniscus lens L32 is provided with an eighth object surface and an eighth imaging surface; the fourth meniscus lens L41 is provided with a ninth object surface and a ninth imaging surface; and the fourth biconvex lens L42 is provided with a tenth object surface and a tenth imaging surface. All of the first object surface, the second object surface, the second imaging surface, the third object surface, the sixth object surface, the sixth imaging surface, the seventh object surface, the seventh imaging surface, the eighth imaging surface, the ninth object surface, the tenth object surface and the tenth imaging surface are convex surfaces. All of the first imaging surface, the third imaging surface, the eighth object surface and the ninth imaging surface are concave surfaces. Both the fourth imaging surface and the fifth imaging surface are concave surfaces or planes.

In the present embodiment, the surface of each of the optical lenses is in a specific shape. At the same time, the first meniscus lens L11 can be adhered to the first biconvex lens L12, the second biconcave lens L22 can be adhered to the second biconvex lens L23, and the fourth meniscus lens L41 can be adhered to the fourth biconvex lens L42. By matching a shape of the surface of each of the optical lenses, and subjecting the first meniscus lens L11, the first biconvex lens L12, the second biconcave lens L22, the second biconvex lens L23, the fourth meniscus lens L41 and the fourth biconvex lens L42 to adhesive treatment, a distance between first meniscus lens L11 and the first biconvex lens L12 is minimized, shorten a distance between the second biconcave lens L22 and the second biconvex lens L23, and shorten a distance between the fourth meniscus lens L41 and the fourth biconvex lens L42, thereby further shorting the TTL of the optical zoom lens 100. At the same time, the adhesive treatment facilitates lowering assembly difficulty of the optical zoom lens 100 and improving assembly accuracy of the optical zoom lens 100.

The optical zoom lens 100 satisfy with the following formulas.

In some embodiments, the first lens group G1 consisting of the first meniscus lens L11, the first biconvex lens L12 and the second meniscus lens L13 is formed, and the third lens group G3 consisting of the third biconvex lens L31 and the third meniscus lens L32 is formed.

A focal length of the first lens group G1 and a focal length of the third lens group G3 satisfy with the following formulas:

$$7.0 \leq f_1/f_W \times \tan(3FOV_W) \leq 9.5 \ (1);$$

and

$$0.50 \leq f_3/f_T \times \tan(3FOV_T) \leq 0.60 \ (2);$$

wherein the focal length of the first lens group is defined as $f_1$, a focal length of the optical zoom lens 100 in a short-focal length state is defined as $f_W$, and a field of view of the optical zoom lens 100 in a short-focal length state is defined as $FOV_W$; and the focal length of the third lens group is defined as $f_3$, a focal length of the optical zoom lens 100 in a long-focal length state is defined as $f_T$ and a field of view of the optical zoom lens 100 in a long-focal length state is defined as $FOV_T$.

In the present embodiment, the second lens group G2 consisting of the first biconcave lens L21, the second biconcave lens L22 and the second biconvex lens L23 is formed, the fourth lens group G4 consisting of the fourth meniscus lens L41 and the fourth biconvex lens L42 is formed. The formal (1) and the formula (2) can restrict structures of the first lens group G1 and the third lens group G3, the structure of the entire optical zoom lens 100, and concretely restricts the focal length of the optical zoom lens 100, which facilitate controlling zoom characteristics of the optical zoom lens 100 and make the optical lens satisfy the zoom requirements of the optical zoom lens 100.

In some embodiments, a focal length of the first meniscus lens L11 and the total track length of the optical zoom lens 100 satisfy with a following formula:

$$|f_{11}/TTL| \leq 1.6 \ (3);$$

wherein, the focal length of the first meniscus lens L11 is defined as $f_{11}$, and the total track length of the optical zoom lens 100 is defined as TTL.

In the present embodiment, the optical zoom lens 100 not only satisfies with formula (1) and formula (2), but also satisfies with formula (3). By controlling the relationship between the focal length of the first meniscus lens L11 and the total track length of the optical zoom lens 100, the total tack length of the optical zoom lens 100 is controlled, which can legitimately distribute lens having different focal lengths to reduce the astigmation, and facilitates limiting the total size of the optical zoom lens 100 at the same time.

In some embodiments, a radius of curvature of the second imaging surface and a radius curvature of the third object surface satisfy with a follow formula:

$$1.1 \leq |(R3-R4)/(R3+R4)| \leq 1.2 \ (4);$$

wherein, the radius of curvature of the second imaging surface is defined as R3 and the radius of curvature of the third object surface is defined as R4.

In the present embodiment, the radius of curvature of the second imaging surface and the radius curvature of the third object surface are limited by formula (4), thereby limiting shapes and structures of the first biconvex lens L12 and the second meniscus lens L13, so as to make both the first biconvex lens L12 and the second meniscus lens L13 have positive refractive powers, which facilitates reducing diameters and total lengths of other lenses, thereby realizing miniaturization of the optical zoom lens 100.

In the above embodiments, the optical zoom lens 100 satisfies with formal (1), formal (2), formula (3) and formula (4) at the same time, and the more formulas the optical zoom lens 100 satisfies with, the better the imaging effect and the zoom effect of the optical zoom lens 100 are, and the structure of the optical zoom lens 100 is more compact at the same time.

In some embodiments, a focal length of the first biconvex lens L12 is less than or equal to 35, a focal length of the second biconvex lens L23 is less than or equal to 20, and a focal length of the third biconvex lens L31 is less than or equal to 17.

In the present embodiment, by legitimately controlling the focal lengths of the first biconvex lens L12, the second biconcave lens L22 and the third biconvex lens L31, distribution of the focal lengths of each of the optical lenses can be further optimized, thereby further improving the zoom effect of the optical zoom lens 100.

In some embodiments, an abbe number of the second meniscus lens L13 is less than or equal to 71, an abbe number of the third biconvex lens L31 is less than or equal to 70, and an abbe number of the fourth biconvex lens L42 is less than or equal to 56.

In some embodiments, a refractive index of the second biconcave lens is less than or equal to 1.82, a refractive index of the third biconvex lens L31 is less than or equal to 1.61, and a refractive index of the fourth biconvex lens L42 is less than or equal to 1.7.

In the present embodiment, in order to control the cost and make the optical lens have better processing performances, the second meniscus lens L13, the third biconvex lens L31, the fourth biconvex lens L42 and the second biconcave lens L22 can be made of glass.

In the above embodiments, by controlling the abbe numbers of the second meniscus lens L13, the third biconvex lens L31 and the fourth biconvex lens L42 and controlling the refractive index of the second biconcave lens L22, the third biconvex lens L31 and the fourth biconvex lens L42, distances between each of the optical lenses can be legitimately controlled, and make the structure of the optical zoom lens 100 more compact at the same time, which facilitates shortening the total track length of the optical zoom lens 100.

In the above embodiments, abbe numbers of optical lenses except the second meniscus lens L13, the third biconvex lens L31 and the fourth biconvex lens L42 can be not limited, and the refractive indexes of optical lenses except the second biconcave lens L22, the third biconvex lens L31 and the fourth biconvex lens L42 can be not limited.

The present application is described in detail in conjunction with embodiments hereinafter.

The present embodiment provides an imaging device 200. FIG. 2 is a structural schematic diagram of an imaging device in a short-focal length state in the present embodiment. Referring to FIG. 2, the imaging device 200 includes: the optical zoom lens 100 described in the embodiments above; an imaging element 70 configured for transferring an optical imagery generated by the optical zoom lens 100 into an electric signal; and a filter element 60, wherein the filter element 60 is disposed between the fourth biconvex lens L42 and the imaging side of the optical zoom lens.

In the present embodiment, referring to FIG. 2, imaging device 200 is in the short-focal length state, that is, the aperture diaphragm 50 and the second lens group G2 are more adjacent to the first lens group G1. In some embodiments, the imaging device 200 can be in the long-focal length state. FIG. 3 is a structural schematic diagram of an imaging device 200 in a long-focal length state in the present embodiment. Referring to FIG. 3, when the imaging device 200 is in the long-focal length state, the aperture diaphragm 50 and the second lens group G2 are more adjacent to the third lens group G3.

Table 1

| Number of mirror surface | Radius of curvature R (mm) | Thickness of center Tc (mm) | Refractive index Nd | Abbe number Vd |
|---|---|---|---|---|
| First object surface | 26.66 | 0.80 | 1.84 | 23.79 |

(continued)

| Number of mirror surface | Radius of curvature R (mm) | Thickness of center Tc (mm) | Refractive index Nd | Abbe number Vd |
|---|---|---|---|---|
| First imaging surface/ second object surface | 19.23 | 1.86 | 1.51 | 64.21 |
| Second imaging surface | -164. 49 | 0.16 | / | / |
| Third object surface | 14.95 | 2.25 | 1.51 | 64.21 |
| Third object surface | 17.89 | D5 | / | / |
| Aperture diaphragm 50 | Infinite | 0.12 | / | / |
| Fourth object surface | -31.83 | 0.79 | 1.78 | 47.51 |
| Fourth imaging surface | 16.38 | 0.25 | / | / |
| Fifth object surface | -10.52 | 1.59 | 1.79 | 47.51 |
| Fifth imaging surface | 173.49 | 2.91 | 1.84 | 23.79 |
| Sixth object surface | -18.10 | D11 | / | / |
| Sixth imaging surface | Infinite | D12 | / | / |
| Seventh object surface | 38.46 | 2.19 | 1.59 | 61.16 |
| Seventh imaging surface | -11.82 | 0.56 | / | / |
| Eighth object surface | -9.75 | 0.79 | 1.80 | 25.47 |
| Eighth imaging surface | -15.25 | D16 | / | / |
| Ninth object surface | 23.18 | 1.26 | 1.84 | 23.79 |
| Ninth imaging surface/ tenth object surface | 11.95 | 4.09 | 1.71 | 53.86 |
| Tenth imaging surface | -31.99 | 6.38 | / | / |
| Object surface of the filter element 60 | Infinite | 1.00 | 1.52 | 64.2 |
| Imaging surface of the filter element 60 | Infinite | 9.18 | / | / |
| Imaging surface of the photosensitive element | Infinite | / | / | / |

Table 1 shows structural parameters of the imaging device 200 in the first embodiment. When the radius of curvature is infinite, the surface is a plane. The thickness of center represents a distance between a certain surface of one lens to a next surface of one lens. Both the refractive index and the abbe number represents data of a medium between the certain surface of one lens and the next surface of the lens.

In Table 1, D5, D11, D12 and D16 are changeable, which can change according to the state of the focal length of the imaging device 200 while the imaging device 200 changes between the short-focal length state and the long-focal length state.

Table 2

| Focal length | D5 | D11 | D12 | D16 |
|---|---|---|---|---|
| 14.5 mm | 7.06 | 9.20 | 1.06 | 2.85 |
| 32.2 mm | 16.16 | 0.10 | 0.10 | 3.81 |

Table 2 shows changes of the changeable data in the first embodiment. When the focal length of the imaging device 200 is 14.5 mm, the imaging device 200 is in the short-focal length state; and when the focal length of the imaging device 200 is 32.2 mm, the imaging device 200 is in the long-focal length state.

The imaging device 200 having structural parameters as shown in Table 1 and Table 2 has the following optical technical indexes.

The total track length (TTL) is less than or equal to 56.5 mm; the focal length (f) of the lens is in a range of 14.5 mm (W) to 32.2 mm (T); the field of view of the lens is in a range of 24.48° (W) to 10.68° (T); the optical distortion of the lens is in a range of -4.7% (W) to 0.5% (T); the focal number (FNO) of the lens system is less than or equal to 4.0; and the image surface size of the lens is 1/2.7", wherein W represents the short-focal length state, and T represents the long-focal length state.

In the present embodiment, the focal length of the first lens group G1 is defined as $f_1$, a focal length of the third lens group G3 is defined as $f_3$, a focal length of the optical zoom lens 100 in a short-focal length state is defined as $f_W$, a field of view of the optical zoom lens 100 in a short-focal length state is defined as FOVw, a focal length of the optical zoom lens 100 in a long-focal length state is defined as $f_T$, and a field of view of the optical zoom lens 100 in a long-focal length state is defined as FOV$_T$, which satisfy with following formulas: $f_1/f_W \times \tan(3FOV_W)=9.07$, and $f_3/f_T \times \tan(3FOV_T)=0.53$. The radius of curvature of the second imaging surface of the first biconvex lens L12 of the optical zoom lens 100 is defined as R3, and the radius of curvature of the third object surface of the second meniscus lens L13 of the optical zoom lens 100 is defined as R4, which satisfy with a following formula: $|(R3-R4)/(R3+R4)|=1.13$. The focal length of the first meniscus lens L 11 of the optical zoom lens 100 is defined as $f_{11}$, and the total track length of the optical zoom lens 100 of the optical zoom lens 100 is defined as TTL, which satisfy with the following formula: $|f_{11}/TTL|=1.51$. The focal length of the first biconvex lens L12 of the optical zoom lens 100 is defined as $f_{12}$, and $f_{12}=33.43$. The focal length of the second biconvex lens L23 of the optical zoom lens 100 is defined as $f_{23}$, and $f_{23}=19.50$ mm. The focal length of the third biconvex lens L31 of the optical zoom lens 100 is defined as $f_{31}$, and $f_{31} = 15.60$ mm. The second meniscus lens L13 of the optical zoom lens 100 is made of glass, the abbe number of the second meniscus lens L13 of the optical zoom lens 100 is defined as Vd13, and Vd13 = 64.21. The third biconvex lens L31 of the optical zoom lens 100 is made of glass, the abbe number of the third biconvex lens L31 of the optical zoom lens 100 is defined as Vd31, and Vd31 = 61.16. The fourth biconvex lens L42 of the optical zoom lens 100 is made of glass, the abbe number of the fourth biconvex lens L42 of the optical zoom lens 100 is defined as Vd42, and Vd42 = 53.86. The second biconcave lens L22 of the optical zoom lens 100 is made of glass, the refractive index of the second biconcave lens L22 of the optical zoom lens 100 is defined as Nd22, and Nd22 = 1.79. The third biconvex lens L31 of the optical zoom lens 100 is made of glass, the refractive index of the third biconvex lens L31 of the optical zoom lens 100 is defined as Nd31, and Nd31=1.59. The fourth biconvex lens L42 of the optical zoom lens 100 is made of glass, the refractive index of the fourth biconvex lens L42 of the optical zoom lens 100 is defined as Nd42, and Nd42=1.71.

Table 3

| Number of mirror surface | Radius of curvature R (mm) | Thickness of center Tc (mm) | Refractive index Nd | Abbe number Vd |
|---|---|---|---|---|
| First object surface | 27.36 | 0.96 | 1.84 | 23.79 |
| First imaging surface/ second object surface | 18.80 | 1.43 | 1.58 | 61.24 |
| Second imaging surface | -232.17 | 0.09 | / | / |
| Third object surface | 14.80 | 1.87 | 1.59 | 68.62 |
| Third object surface | 16.69 | 3.80 | / | / |
| Aperture diaphragm 50 | Infinite | 0.11 | / | / |
| Fourth object surface | -50.18 | 0.11 | 1.78 | 47.51 |
| Fourth imaging surface | 14.41 | 0.79 | / | / |
| Fifth object surface | -9.79 | 0.27 | 1.79 | 47.51 |
| Fifth imaging surface | 99.41 | 3.10 | 1.84 | 23.79 |
| Sixth object surface | -18.13 | 9.39 | / | / |
| Sixth imaging surface | Infinite | 1.14 | / | / |
| Seventh object surface | 36.42 | 2.37 | 1.59 | 68.62 |
| Seventh imaging surface | -11.96 | 0.57 | / | / |
| Eighth object surface | -9.92 | 0.80 | 1.80 | 25.47 |
| Eighth imaging surface | -15.51 | 1.39 | / | / |
| Ninth object surface | 22.59 | 2.17 | 1.84 | 23.79 |
| Ninth imaging surface/ tenth object surface | 12.34 | 3.69 | 1.68 | 55.55 |
| Tenth imaging surface | -31.87 | 6.47 | / | / |
| Object surface of the filter element 60 | Infinite | 1.00 | 1.52 | 64.2 |
| Imaging surface of the filter element 60 | Infinite | 9.27 | / | / |

(continued)

| Number of mirror surface | Radius of curvature R (mm) | Thickness of center Tc (mm) | Refractive index Nd | Abbe number Vd |
|---|---|---|---|---|
| Imaging surface of the photosensitive element | Infinite | / | / | / |

Table 3 shows structural parameters of the imaging device 200 in the second embodiment. The structure of the optical zoom lens 100 in the second embodiment is the same as that in the first embodiment, and the differences between the optical zoom lens 100 in the first embodiment and the second embodiment are the parameters of the optical lenses are different.

In Table 2, D5, D11, D12 and D16 are changeable, which can change according to the state of the focal length of the imaging device 200 while the imaging device 200 changes between the short-focal length state and the long-focal length state.

Table 4

| Focal length | D5 | D11 | D12 | D16 |
|---|---|---|---|---|
| 14.8 mm | 6.80 | 8.39 | 1.14 | 1.39 |
| 30.5 mm | 14.93 | 0.26 | 0.35 | 2.16 |

Table 4 shows changes of the changeable data in the second embodiment. When the focal length of the imaging device 200 is 14.8 mm, the imaging device 200 is in the short-focal length state; and when the focal length of the imaging device 200 is 30.5 mm, the imaging device 200 is in the long-focal length state.

The imaging device 200 having structural parameters as shown in Table 3 and Table 4 has the following optical technical indexes.

The total track length (TTL) is less than or equal to 54.5 mm; the focal length (f) of the lens is in a range of 14.8 mm (W) to 30.5 mm (T); the field of view of the lens is in a range of 23.86° (W) to 11.30° (T); the optical distortion of the lens is in a range of -4.2% (W) to 0.5% (T); the focal number (FNO) of the lens system is less than or equal to 4.0; and the image surface size of the lens is 1/2.7", wherein W represents the short-focal length state, and T represents the long-focal length state.

In the present embodiment, the focal length of the first lens group G1 is defined as $f_1$, a focal length of the third lens group G3 is defined as $f_3$, a focal length of the optical zoom lens 100 in a short-focal length state is defined as $f_w$, a field of view of the optical zoom lens 100 in a short-focal length state is defined as FOVw, a focal length of the optical zoom lens 100 in a long-focal length state is defined as $f_T$, and a field of view of the optical zoom lens 100 in a long-focal length state is defined as $FOV_T$, which satisfy with following formulas: $f_1/f_w \times \tan(3FOV_W) = 7.58$, and $f_3/f_T \times \tan(3FOV_T) = 0.58$. The radius of curvature of the second imaging surface of the first biconvex lens L12 of the optical zoom lens 100 is defined as R3, and the radius of curvature of the third object surface of the second meniscus lens L13 of the optical zoom lens 100 is defined as R4, which satisfy with a following formula: $|(R3-R4)/(R3+R4)| = 1.19$. The focal length of the first meniscus lens L11 of the optical zoom lens 100 is defined as $f_{11}$, and the total track length of the optical zoom lens 100 of the optical zoom lens 100 is defined as TTL, which satisfy with the following formula: $|f_{11}/TTL| = 1.37$. The focal length of the first biconvex lens L12 of the optical zoom lens 100 is defined as $f_{12}$, and $f_{12} = 29.59$ mm. The focal length of the second biconvex lens L23 of the optical zoom lens 100 is defined as $f_{23}$, and $f_{23} = 18.34$ mm. The focal length of the third biconvex lens L31 of the optical zoom lens 100 is defined as $f_{31}$, and $f_{31} = 15.47$. The second meniscus lens L13 of the optical zoom lens 100 is made of glass, the abbe number of the second meniscus lens L13 of the optical zoom lens 100 is defined as Vd13, and Vd13 = 68.62. The third biconvex lens L31 of the optical zoom lens 100 is made of glass, the abbe number of the third biconvex lens L31 of the optical zoom lens 100 is defined as Vd31, and Vd31 = 68.62. The fourth biconvex lens L42 of the optical zoom lens 100 is made of glass, the abbe number of the fourth biconvex lens L42 of the optical zoom lens 100 is defined as Vd42, and Vd42 = 55.55. The second biconcave lens L22 of the optical zoom lens 100 is made of glass, the refractive index of the second biconcave lens L22 of the optical zoom lens 100 is defined as Nd22, and Nd22 = 1.79. The third biconvex lens L31 of the optical zoom lens 100 is made of glass, the refractive index of the third biconvex lens L31 of the optical zoom lens 100 is defined as Nd31, and Nd31 = 1.59. The fourth biconvex lens L42 of the optical zoom lens 100 is made of glass, the refractive index of the fourth biconvex lens L42 of the optical zoom lens 100 is defined as Nd42, and Nd42 = 1.68.

In the embodiments, both the imaging device 200 in the first embodiment and the imaging device 200 in the second embodiment satisfy with the formulas in Table 5 herein.

Table 5

| Formula | First embodiment | Second embodiment |
|---|---|---|
| $\dfrac{f_1}{f_W} \times \tan(3\mathrm{FOV_W})$ | 9.07 | 7.58 |
| $\dfrac{f_3}{f_T} \times \tan(3\mathrm{FOV_T})$ | 0.53 | 0.58 |
| $\left\| \dfrac{(R3 - R4)}{(R3 + R4)} \right\|$ | 1.13 | 1.19 |
| $\|f_{11}/\mathrm{TTL}\|$ | 1.51 | 1.37 |
| $f_{12} \leq 35$ | 33.43 | 29.59 |
| $f_{23} \leq 20$ | 19.50 | 18.34 |
| $f_{31} \leq 17$ | 15.60 | 15.47 |
| $Vd13 \leq 71$ | 64.21 | 68.62 |
| $Vd31 \leq 70$ | 61.16 | 68.62 |
| $Vd42 \leq 56$ | 53.86 | 55.55 |
| $Nd22 \leq 1.82$ | 1.79 | 1.79 |
| $Nd31 \leq 1.61$ | 1.59 | 1.59 |
| $Nd42 \leq 1.7$ | 1.71 | 1.68 |

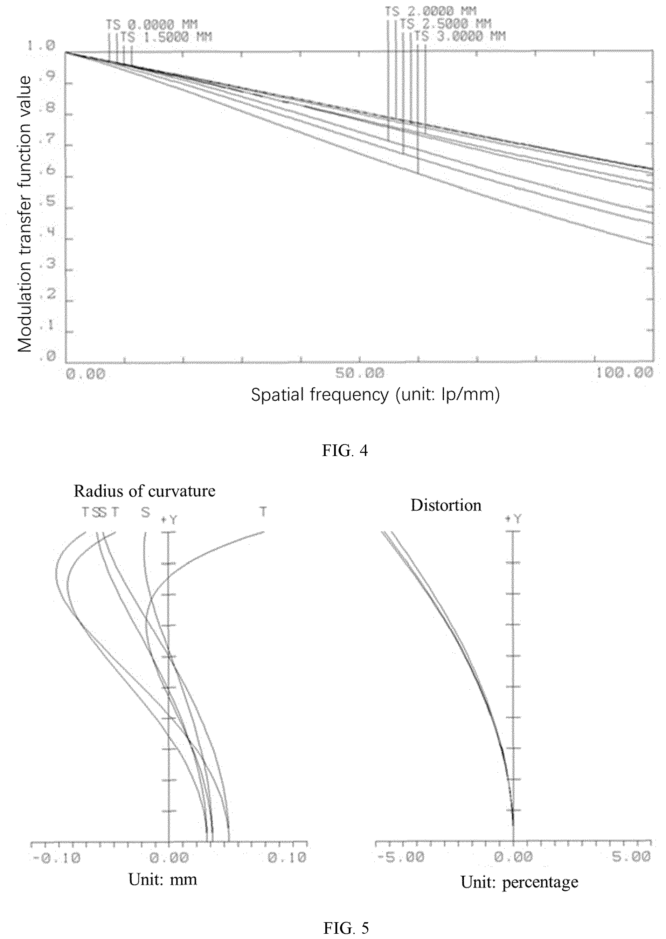

FIG. 4 is a modulation transfer function curve of an imaging device 200 in visible spectrum at room temperature in a short-focal length state in embodiments of the present application. Referring to FIG. 4, when the imaging device 200 in embodiments of the present application is in the short-focal length state, the modulation transfer function (MTF) curve of the imaging device 200 in visible spectrum at room temperature is relatively smooth and concentrated, and an average value of the MTF in the full field of view (a half image height is defined as Y', and Y'=3.0 mm) can be over 0.4. In that way, the imaging device 200 in embodiments of the present application can have relatively high imaging quality in the short-focal length state.

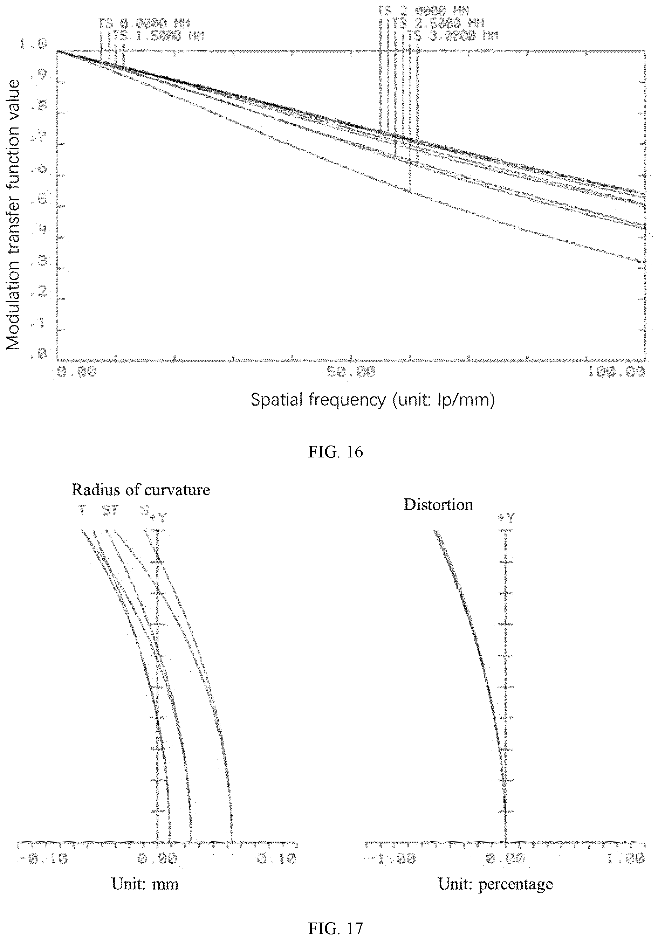

FIG. 16 is a modulation transfer function curve of an imaging device 200 in visible spectrum at room temperature in a long-focal length state in embodiments of the present application. Referring to FIG. 16, when the imaging device 200 in embodiments of the present application is in the long-focal length state, the modulation transfer function (MTF) curve of the imaging device 200 in visible spectrum at room temperature is relatively smooth and concentrated, and an average value of the MTF in the full field of view (a half image height is defined as Y', and Y'=3.0 mm) can be over 0.4. In that way, the imaging device 200 in embodiments of the present application can have relatively high imaging quality in the long-focal length state.

FIG. 5 shows field curvature and distortion of an imaging device 200 in visible spectrum in a short-focal length state in some embodiments of the present application. FIG. 17 shows field curvature and distortion of an imaging device 200 in visible spectrum in a long-focal length state in some embodiments of the present application. Referring to FIG. 5 and FIG. 17, when the imaging device 200 in embodiments of the present application is in the short-focal length state, the field curvature of the imaging device 200 is controlled in a range of ±0.1mm; and when the imaging device 200 in embodiments of the present application is in the long-focal length state, the field curvature of the imaging device 200 is controlled in a range of ±0.1m. Field curvature is also called "curvature of image field". That is, when the field curvature exists, a cross point of the total beam does not overlaps with an ideal point, although each of the points can achieve a clear image point, the total image plane is curved. In FIG. 5 and FIG. 17, T represents meridian field curvature, and S represents sagittal field curvature.

In addition, coordinate function values of the field curvature curve are a distance between a current focal plane and the paraxial focal plane and a distance between a current image plane and the paraxial focal plane. Coordinate function values of the meridian field curvature curve shows a distance between a current focal plane and a paraxial focal plane along the Z axis, and the coordinate function values are tested on the meridian plane (YZ plane), and coordinate function values of the sagittal field curvature curve are tested on a plane perpendicular to the meridian plane. In FIG. 5 and FIG. 17, base lines are located on the optical axis, and peaks of the curve represent the maximum field of view (angle or height). The vertical axes are not provided with units, since the curve is always normalized with the largest radial field of view.

Referring to FIG. 5 and FIG. 17, when the imaging device 200 in embodiments of the present application are in the short-focal length state, the distortion is controlled well, and the distortion is controlled within -5.0%. Similarly, when the imaging device 200 in embodiments of the present application are in the long-focal length state, the distortion is controlled well, and the distortion is controlled within -5.0%.

In the present embodiment, FIG. 5 and FIG. 17 considers a plurality of wave lengths (including 0.486nm, 0.587nm and 0.656nm). In general, lens distortion is actually a general term for perspective distortion inherent in optical lenses, that is, the distortion caused by perspective reasons. The distortion is very unfavourable to the image quality of the photo, after all, the purpose of photography is to reproduce, not to exaggerate. However, because lens distortion is the inherent characteristics of the optical lens (convex lens convergence of light, and concave lens dispersal of light), lens distortion cannot be eliminated, only to improve.

Referring to FIG. 5 and FIG. 17, distortion of the optical zoom lens 100 in the short-focal length state in embodiments of the present application is -4.7%, and distortion of the optical zoom lens 100 in the long-focal length state in embodiments of the present application merely -4.2%. The distortion is set in this way to balance the focal length, field of view and the size of the corresponding camera target surface, and the deformation caused by the distortion can be corrected by post image processing.

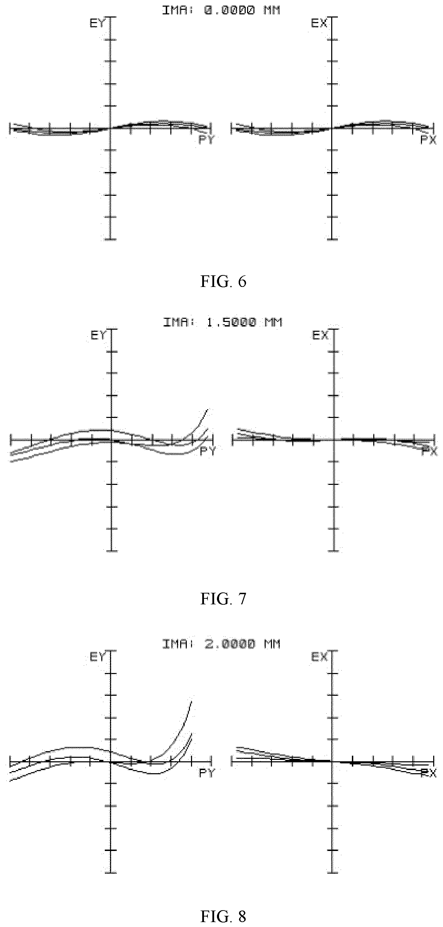

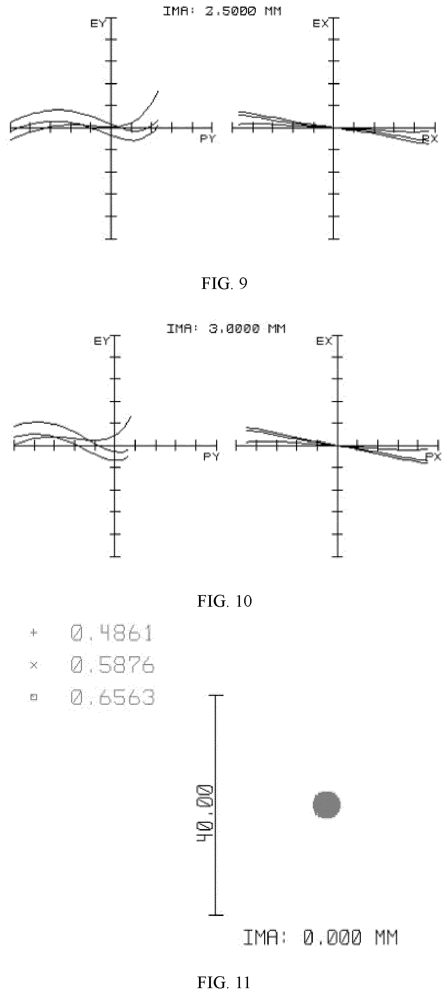

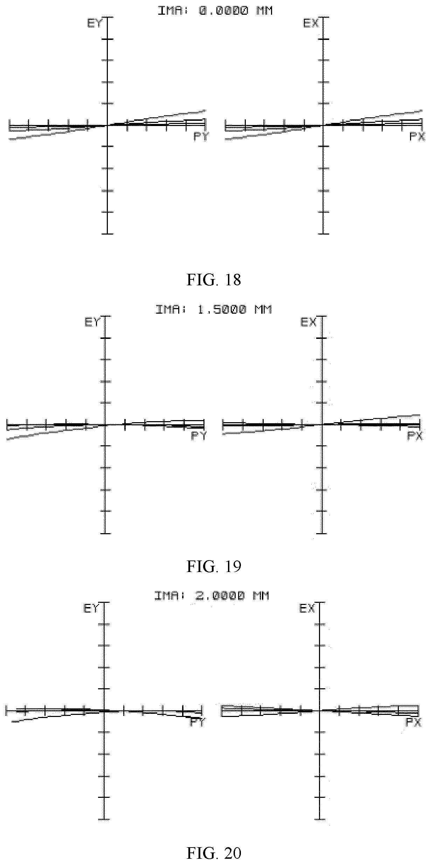

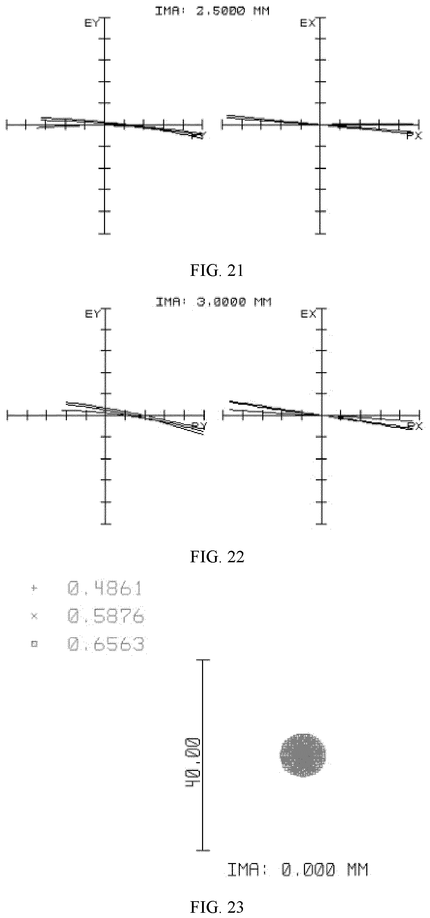

FIG. 6 is a first transverse ray fan of an imaging device in visible spectrum in a short-focal length state in embodiments of the present application. FIG. 7 is a second transverse ray fan of an imaging device in visible spectrum in a short-focal length state in embodiments of the present application. FIG. 8 is a third transverse ray fan of an imaging device in visible spectrum in a short-focal length state in embodiments of the present application. FIG. 9 is a fourth transverse ray fan of an imaging device in visible spectrum in a short-focal length state in embodiments of the present application. FIG. 10 is a fifth transverse ray fan of an imaging device in visible spectrum in a short-focal length state in embodiments of the present application. FIG. 18 is a first transverse ray fan of an imaging device in visible spectrum in a long-focal length state in embodiments of the present application. FIG. 19 is a second transverse ray fan of an imaging device in visible spectrum in a long-focal length state in embodiments of the present application. FIG. 20 is a third transverse ray fan of an imaging device in visible spectrum in a long-focal length state in embodiments of the present application. FIG. 21 is a fourth transverse ray fan of an imaging device in visible spectrum in a long-focal length state in embodiments of the present application. FIG. 22 is a fifth transverse ray fan of an imaging device in visible spectrum in a long-focal length state in embodiments of the present application. Referring to FIG. 6 to FIG. 10, and FIG. 18 to FIG. 22, when the imaging device 200 of embodiments of the present application is in the short-focal length state or the long-focal length state, curves in the ray fans are relatively concentrated, which indicates that spherical aberration and chromatic dispersion of the imaging device 200 are controlled well when the imaging device 200 is in the short-focal length state or the long-focal length state.

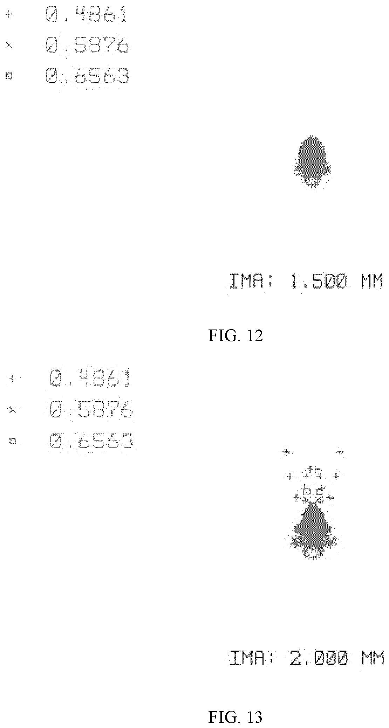

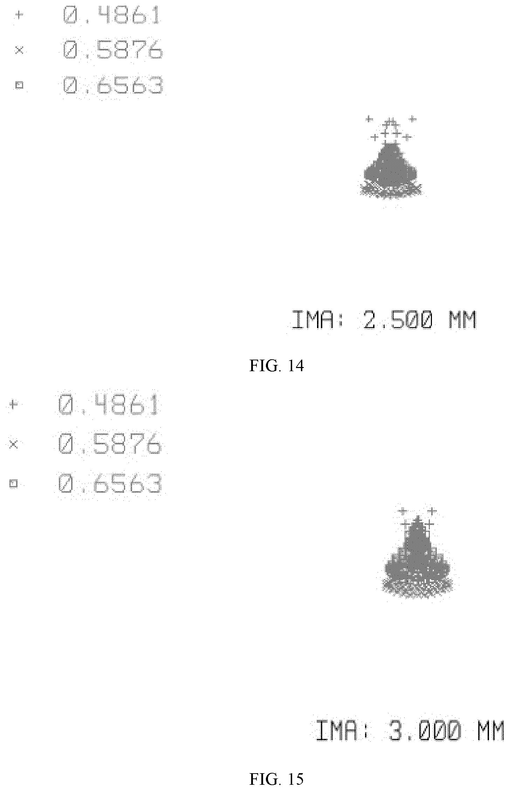

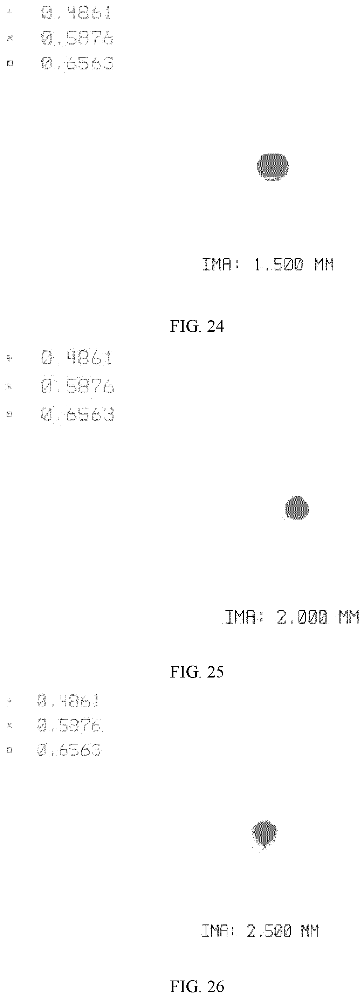

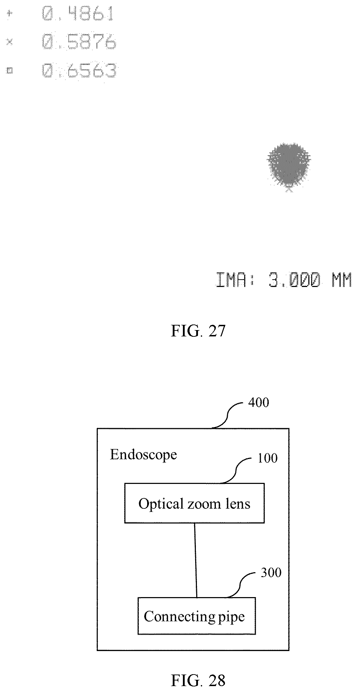

FIG. 11 is a first spot diagram of an imaging device in visible spectrum in a short-focal length state in embodiments of the present application. FIG. 12 is a second spot diagram of an imaging device in visible spectrum in a short-focal length state in embodiments of the present application. FIG. 13 is a third spot diagram of an imaging device in visible spectrum in a short-focal length state in embodiments of the present application. FIG. 14 is a fourth spot diagram of an imaging device in visible spectrum in a short-focal length state in embodiments of the present application. FIG. 15 is a fifth spot diagram of an imaging device in visible spectrum in a short-focal length state in embodiments of the present application. FIG. 23 is a first spot diagram of an imaging device in visible spectrum in a long-focal length state in embodiments of the present application. FIG. 24 is a second spot diagram of an imaging device in visible spectrum in a long-focal length state in embodiments of the present application. FIG. 25 is a third spot diagram of an imaging device in visible spectrum in a long-focal length state in embodiments of the present application. FIG. 26 is a fourth spot diagram of an imaging device in visible spectrum in a long-focal length state in embodiments of the present application. FIG. 27 is a fifth spot diagram of an imaging device in visible spectrum in a long-focal length state in embodiments of the present application. Referring to FIG. 11 to FIG. 15, and FIG. 23 to FIG. 27, when the imaging device 200 is in the short-focal length state or the long-focal length state, spot radii are relatively small and concentrated, which indicates that astigmation and coma aberration of the imaging device 200 are controlled well when the imaging device 200 is in the short-focal length state or the long-focal length state.

Through the testing and verification of the above embodiments, the present application provides a large target surface, large aperture, low-cost and high-definition optical zoom lens 100, which employs ten optical lenses having specific structures and shapes and being arranged in a specific order from the object side to the imaging side. Through the distribution and combination of the specific optical focal lengths of each optical lens, the imaging device 200 employing the optical zoom lens 100 can achieve better distortion control and excellent imaging performance.

The imaging device 200 provided by the embodiments of the present application has an imaging surface size of up to 1/2.7 inch CCD (Charge Coupled Device) camera or CMOS (Complementary Metal-Oxide Semiconductor) camera, which meets the demand for high resolution of the device. At the same time, when the imaging device 200 is in a short-focal length state or a long-focal length state, the full-field-of-view MTF value of the imaging device 200 reaches more than 0.4 in the case of 1001p/mm. Therefore, the imaging device 200 has excellent imaging quality. In addition, the optical focal length of each optical lens in the optical zoom lens 100 in the imaging device 200 is reasonably distributed, and the shape of the optical lens is easy to process, and the cost of the lens is low.

Referring to FIG. 28, the present embodiment provides an endoscope 400, which includes the optical zoom lens 100 of the above embodiment and a connecting pipe 300, wherein the connecting pipe 300 is connected to the optical zoom lens 100, and configured for transferring the optical imagery generated by the optical zoom lens 100.

It should be noted that specific examples in the present embodiment can be referred to the examples described in the above embodiments and optional embodiments, which will not be repeated herein.

The skilled in the art should understood that the technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. An optical zoom lens, **characterized by** comprising: a lens group and an aperture diaphragm;

   wherein the lens group comprises: a first meniscus lens, a first biconvex lens, a second meniscus lens, a first biconcave lens, a second biconcave lens, a second biconvex lens, a third biconvex lens, a third meniscus lens, a fourth meniscus lens and a fourth biconvex lens; and the aperture diaphragm is arranged between the second meniscus lens and the first biconcave lens, or is arranged on the first biconcave lens;
   wherein the first meniscus lens, the first biconvex lens, the second meniscus lens, the first biconcave lens, the second biconcave lens, the second biconvex lens, the third biconvex lens, the third meniscus lens, the fourth meniscus lens and the fourth biconvex lens are sequentially arranged from an object side of the optical zoom lens to an imaging side of the optical zoom lens.

2. The optical zoom lens of claim 1, wherein all of the first meniscus lens, the first biconcave lens, the second biconcave lens, the third meniscus lens and the fourth meniscus lens have a negative refractive power; and
   all of the first biconvex lens, the second meniscus lens, the second biconvex lens, the third biconvex lens and the fourth biconvex lens have a positive refractive power.

3. The optical zoom lens of claim 2, wherein a first lens group consisting of the first meniscus lens, the first biconvex lens and the second meniscus lens is formed, and a third lens group consisting of the third biconvex lens and the third meniscus lens group is formed;

   wherein a focal length of the first lens group and a focal length of the third lens group satisfy following formulas:

   $$7.0 \leq f_1/f_{\mathrm{W}} \times \tan(3\mathrm{FOV_W}) \leq 9.5;$$

   and

   $$0.50 \leq f_3/f_{\mathrm{T}} \times \tan(3\mathrm{FOV_T}) \leq 0.60,$$

   wherein the focal length of the first lens group is defined as $f_1$, a focal length of the optical zoom lens in a short-focal length state is defined as $f_{\mathrm{W}}$, and a field of view of the optical zoom lens in a short-focal length state is defined as FOVw; and
   the focal length of the third lens group is defined as $f_3$, a focal length of the optical zoom lens in a long-focal length state is defined as $f_{\mathrm{T}}$ and a field of view of the optical zoom lens in a long-focal length state is defined as $\mathrm{FOV_T}$.

4. The optical zoom lens of claim 2, wherein

the first meniscus lens is provided with a first object surface and a first imaging surface;

the first biconvex lens is provided with a second object surface and a second imaging surface;

the second meniscus lens is provided with a third object surface and a third imaging surface; the first biconcave lens is provided with a fourth object surface and a fourth imaging surface;

the second biconcave lens is provided with a fifth object surface and a fifth imaging surface; the second biconvex lens is provided with a sixth object surface and a sixth imaging surface;

the third biconvex lens is provided with a seventh object surface and a seventh imaging surface;

the third meniscus lens is provided with an eighth object surface and an eighth imaging surface;

the fourth meniscus lens is provided with a ninth object surface and a ninth imaging surface; and

the fourth biconvex lens is provided with a tenth object surface and a tenth imaging surface; wherein all of the first object surface, the second object surface, the second imaging surface, the third object surface, the sixth object surface, the sixth imaging surface, the seventh object surface, the seventh imaging surface, the eighth imaging surface, the ninth object surface, the tenth object surface and the tenth imaging surface are convex surfaces; all of the first imaging surface, the third imaging surface, the eighth object surface and the ninth imaging surface are concave surfaces;

both the fourth imaging surface and the fifth imaging surface are concave surfaces or planes.

5. The optical zoom lens of claim 4, wherein a radius of curvature of the second imaging surface and a radius of curvature of the third object surface satisfy with a following formula:

$$1.1 \le |(R3-R4)/(R3+R4)| \le 1.2;$$

wherein the radius of curvature of the second imaging surface is defined as R3 and the radius of curvature of the third object surface is defined as R4.

6. The optical zoom lens of claim 2, wherein a focal length of the first meniscus lens and a total track length of the optical zoom lens satisfy with a following formula:

$$|f_{11}/TTL| \le 1.6;$$

wherein the focal length of the first meniscus lens is defined as $f_{11}$ and a total track length of the optical zoom lens is defined as TTL.

7. The optical zoom lens of any one of claims 1 to 6, wherein a focal length of the first biconvex lens is less than or equal to 35, a focal length of the second biconvex lens is less than or equal to 20, and a focal length of the third biconvex lens is less than or equal to 17.

8. The optical zoom lens of any one of claims 1 to 6, wherein an abbe number of the second meniscus lens is less than or equal to 71, an abbe number of the third biconvex lens is less than or equal to 70, and an abbe number of the fourth biconvex lens is less than or equal to 56.

9. The optical zoom lens of any one of claims 1 to 6, wherein a refractive index of the second biconcave lens is less than or equal to 1.82, a refractive index of the third biconvex lens is less than or equal to 1.61, and a refractive index of the fourth biconvex lens is less than or equal to 1.7.

10. The optical zoom lens of any one of claims 1 to 6, wherein the first meniscus lens is adhered to the first biconvex lens, the second biconcave lens is adhered to the second biconvex lens, and the fourth meniscus lens is adhered to the fourth biconvex lens.

11. An imaging device, **characterized by** comprising:

the optical zoom lens of any one of claims 1 to 10;

an imaging element configured for transferring an optical imagery generated by the optical zoom lens into an electric signal; and

a filter element, wherein the filter element is disposed between the fourth biconvex lens and the imaging side of the optical zoom lens.

12. An endoscope, **characterized by** comprising:

the optical zoom lens of any one of claims 1 to 10; and
a connecting pipe, wherein the connecting pipe is connected to the optical zoom lens, and configured for transferring the optical imagery generated by the optical zoom lens.

FIG. 1

FIG. 2

FIG. 3

FIG. 4

FIG. 5

IMA: 0.0000 MM

FIG. 6

IMA: 1.5000 MM

FIG. 7

IMA: 2.0000 MM

FIG. 8

IMA: 2.5000 MM

FIG. 9

IMA: 3.0000 MM

FIG. 10

+  0.4861
×  0.5876
□  0.6563

40.00

IMA: 0.000 MM

FIG. 11

+    0.4861
×    0.5876
□    0.6563

IMA: 1.500 MM

FIG. 12

+    0.4861
×    0.5876
□    0.6563

IMA: 2.000 MM

FIG. 13

+   0.4861
×   0.5876
□   0.6563

IMA: 2.500 MM

FIG. 14

+   0.4861
×   0.5876
□   0.6563

IMA: 3.000 MM

FIG. 15

FIG. 16

FIG. 17

IMA: 0.0000 MM

FIG. 18

IMA: 1.5000 MM

FIG. 19

IMA: 2.0000 MM

FIG. 20

FIG. 21

FIG. 22

FIG. 23

+ 0.4861
× 0.5876
▫ 0.6563

IMA: 1.500 MM

FIG. 24

+ 0.4861
× 0.5876
▫ 0.6563

IMA: 2.000 MM

FIG. 25

+ 0.4861
× 0.5876
▫ 0.6563

IMA: 2.500 MM

FIG. 26

+ 0.4861
× 0.5876
□ 0.6563

IMA: 3.000 MM

FIG. 27

400

Endoscope

100

Optical zoom lens

300

Connecting pipe

FIG. 28

## INTERNATIONAL SEARCH REPORT

| | |
|---|---|
| | International application No. |
| | **PCT/CN2022/109883** |

| | |
|---|---|
| **A.** | **CLASSIFICATION OF SUBJECT MATTER** |
| | G02B 15/00(2006.01)i; G02B 23/24(2006.01)i |

According to International Patent Classification (IPC) or to both national classification and IPC

| | |
|---|---|
| **B.** | **FIELDS SEARCHED** |

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNABS, VEN, CNTXT, CJFD, ENTXT: 镜头, 变焦, 透镜, 镜片, 弯月, 双凸, 双凹, 正, 负, lens, zoom+, meniscus, biconvex, biconcave, positive, negative

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| PX | CN 114442291 A (ZHEJIANG HEALNOC TECHNOLOGY CO., LTD.) 06 May 2022 (2022-05-06)<br>        description, paragraphs 23-68, and figures 1-27 | 1-12 |
| X | JP 2011053526 A (KINOSHITA OPTICAL RESEARCH INSTITUTE CO., LTD. et al.) 17 March 2011 (2011-03-17)<br>        description, paragraphs 14-19, and figures 1-3B | 1-12 |
| X | JP 05297275 A (MATSUSHITA ELECTRIC INDUSTRIAL CO., LTD.) 12 November 1993 (1993-11-12)<br>        description, paragraphs 9-63, and figure 1 | 1-12 |
| A | US 2003189763 A1 (CANON K. K.) 09 October 2003 (2003-10-09)<br>        entire document | 1-12 |
| A | US 2008247055 A1 (ASIA OPTICAL CO., INC.) 09 October 2008 (2008-10-09)<br>        entire document | 1-12 |
| A | US 5235466 A (MATSUSHITA ELECTRIC INDUSTRIAL CO., LTD.) 10 August 1993 (1993-08-10)<br>        entire document | 1-12 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 December 2022** | **09 January 2023** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/109883**

| Patent document cited in search report | | | Publication date (day/month/year) | Patent family member(s) | | | Publication date (day/month/year) |
|---|---|---|---|---|---|---|---|
| CN | 114442291 | A | 06 May 2022 | None | | | |
| JP | 2011053526 | A | 17 March 2011 | None | | | |
| JP | 05297275 | A | 12 November 1993 | JP | H05297275 | A | 12 November 1993 |
| US | 2003189763 | A1 | 09 October 2003 | JP | 2003295053 | A | 15 October 2003 |
| US | 2008247055 | A1 | 09 October 2008 | TW | 200841068 | A | 16 October 2008 |
| US | 5235466 | A | 10 August 1993 | EP | 0531925 | A1 | 17 March 1993 |
| | | | | DE | 69223106 | D1 | 18 December 1997 |
| | | | | JP | H0572474 | A | 26 March 1993 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210361101